# EUROPEAN PATENT APPLICATION

(11) **EP 4 668 849 A1**
(43) Date of publication of application: **24.12.2025**
(21) Application number: 23922033.8
(22) Date of filing: 17.02.2023
(51) Int. Cl.: H04W 28/20

(54) **RESOURCE ALLOCATION METHOD AND APPARATUS, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Dehns Germany Partnerschaft mbB
(86) International application number: PCT/CN2023/076969
(87) International publication number: WO 2024/168902

(57) **Abstract**

The present disclosure relates to the technical field of communications, and relates a resource allocation method and apparatus, and a storage medium, for use in determining the resource allocation range of a physical downlink shared channel (PDSCH) and improving the reliability of PDSCH transmission. The method comprises: in response to determining that a bandwidth configured by a network device to a control resource set is greater than a system bandwidth, determining the resource allocation range of a PDSCH; and performing resource allocation of the PDSCH on the basis of the resource allocation range.

## Description

### TECHNICAL FIELD

The present disclosure relates to the field of communication technology and, in particular, to a resource allocation method and apparatus, and a storage medium.

### BACKGROUND

In the New Radio (NR) system, when a terminal transmits a physical downlink control channel (PDCCH), the PDCCH is transmitted through a control resource set (CORESET).

At present, it is considered to support NR technology in frequency bands with smaller system bandwidth supported by terminals. However, since the system bandwidth is small, the system bandwidth cannot carry all the transmission resources contained in the control resource set. Since the resources of the physical downlink shared channel (PDSCH) are determined based on the resources of the control resource set, how to determine the allocation resources of PDSCH is a problem required to be solved.

### SUMMARY

In order to overcome the problems existing in the related art, the present disclosure provides a resource allocation method and apparatus, and a storage medium.

A first aspect of the embodiments of the present disclosure provides a method for allocating resource, which is performed by a terminal and includes:
in response to determining that a bandwidth of a control resource set configured by a network device is greater than a system bandwidth, determining a resource allocation range of a physical downlink shared channel PDSCH;
based on the resource allocation range, performing resource allocation of the PDSCH.

In an embodiment, the resource allocation range of the PDSCH is determined based on at least one of the following:
the system bandwidth;
a resource range of the control resource set;
an available resource used for transmitting a channel/signal in the control resource set.

In an embodiment, based on the resource allocation range, performing the resource allocation of the PDSCH includes:
based on the resource allocation range and a resource allocation field of a physical downlink control channel PDCCH, determining a resource allocation amount and a resource position occupied by the PDSCH within the resource allocation range; where the resource allocation field of the PDCCH is used for indicating the resource allocation amount and the resource position of the PDSCH within the resource allocation range.

In an embodiment, the resource allocation range is determined based on the system bandwidth, the system bandwidth is determined based on indication information, and the indication information is carried in a master information block MIB; or
the system bandwidth is determined based on a frequency band bandwidth corresponding to an operation frequency band of the terminal.

In an embodiment, the resource allocation range is determined based on the resource range of the control resource set, and the method further includes:
determining the available resource used for transmitting the channel/signal within the resource range of the control resource set.

In an embodiment, the method further includes:
based on the resource allocation range, the resource allocation field of the PDCCH and the available resource used for transmitting the channel/signal in the control resource set, determining a resource occupied by the PDSCH in the available resource used for transmitting the channel/signal in the control resource set.

In an embodiment, the method further includes:
performing rate dematching and resource demapping based on the resource occupied by the PDSCH in the available resource used for transmitting the channel/signal in the control resource set.

In an embodiment, the method further includes:
receiving a downlink channel/signal based on the resource occupied by the PDSCH in the available resource used for transmitting the channel/signal in the control resource set.

In an embodiment, the method further includes:
performing rate dematching and resource demapping based on a resource indicated by the resource allocation field of the PDCCH.

In an embodiment, the method further includes:
receiving a downlink channel/signal based on the available resource used for transmitting the channel/signal in the control resource set.

In an embodiment, the method includes:
filling a transmission symbol mapped outside the available resource used for transmitting the channel/signal in the control resource set.

In an embodiment, the resource allocation range is determined based on the resource range of the control resource set, the terminal receives the PDSCH within the system bandwidth, or the terminal receives all resources allocated by the terminal for the PDSCH.

In an embodiment, the available resource used for transmitting the channel/signal in the control resource set is determined based on the system bandwidth and/or a resource of the control resource set.

In an embodiment, the method further includes:
in response to the resource allocation including allocating a virtual resource block for the PDSCH, performing a mapping from the virtual resource block to a physical resource block based on the resource allocation range.

A second aspect of the embodiments of the present disclosure provides a method for allocating resource, which is performed by a network device and includes:
determining that a bandwidth configured for a control resource set is greater than a system bandwidth, obtaining an allocation resource allocated by a terminal, based on a resource allocation range, to a physical downlink shared channel PDSCH;
sending the PDSCH based on the allocation resource of the PDSCH.

In an embodiment, the resource allocation range is determined based on at least one of the following:
the system bandwidth;
a resource range of the control resource set;
an available resource used for transmitting a channel/signal in the control resource set.

In an embodiment, the allocation resource is determined based on the resource allocation range and a resource allocation field of a physical downlink control channel PDCCH, and the resource allocation field of the PDCCH is used for indicating a resource allocation amount and a resource position of the PDSCH within the resource allocation range.

In an embodiment, the resource allocation range is determined based on the system bandwidth, the system bandwidth is determined based on indication information, and the indication information is carried in a master information block MIB; or
the system bandwidth is determined based on a frequency band bandwidth corresponding to an operation frequency band of the terminal.

In an embodiment, the resource allocation range is determined based on the resource range of the control resource set, and the resource range of the control resource set includes the available resource used for transmitting the channel/signal.

In an embodiment, a resource, occupied by the PDSCH in the available resource used for transmitting the channel/signal in the control resource set, is determined based on the resource allocation range, the resource allocation field of the PDCCH and the available resource used for transmitting the channel/signal in the control resource set.

In an embodiment, rate matching and resource mapping is performed based on the resource occupied by the PDSCH in the available resource used for transmitting the channel/signal in the control resource set.

In an embodiment, the method further includes:
sending a downlink channel/signal based on the resource occupied by the PDSCH in the available resource used for transmitting the channel/signal of the control resource set.

In an embodiment, the method further includes:
performing rate matching and resource mapping based on a resource indicated by the resource allocation field of the PDCCH.

In an embodiment, the method further includes:
sending a downlink channel/signal based on the available resource used for transmitting the channel/signal in the control resource set.

In an embodiment, the method further includes:
discarding a transmission symbol mapped outside the available resource used for transmitting the channel/signal in the control resource set.

In an embodiment, the available resource used for transmitting the channel/signal in the control resource set is determined based on the system bandwidth and/or a resource of the control resource set.

A third aspect of the embodiments of the present disclosure provides a resource allocation apparatus, where the apparatus includes:
a processing module, configured to determine that a bandwidth of a control resource set configured by a network device is greater than a system bandwidth, determine a resource allocation range of a physical downlink shared channel PDSCH; based on the resource allocation range, perform resource allocation of the PDSCH.

In an embodiment, the resource allocation range of the PDSCH is determined based on at least one of the following:
the system bandwidth;
a resource range of the control resource set;
an available resource used for transmitting a channel/signal in the control resource set.

In an embodiment, the processing module is configured to determine a resource allocation amount and a resource position occupied by the PDSCH within the resource allocation range based on the resource allocation range and a resource allocation field of a physical downlink control channel PDCCH; where the resource allocation field of the PDCCH is used for indicating the resource allocation amount and the resource position of the PDSCH within the resource allocation range.

In an embodiment, the resource allocation range is determined based on the system bandwidth, the system bandwidth is determined based on indication information, and the indication information is carried in a master information block MIB; or
the system bandwidth is determined based on a frequency band bandwidth corresponding to an operation frequency band of the terminal.

In an embodiment, the resource allocation range is determined based on the resource range of the control resource set, and the processing module is configured to determine the available resource used for transmitting the channel/signal within the resource range of the control resource set.

In an embodiment, the processing module is configured to determine a resource occupied by the PDSCH in the available resource used for transmitting the channel/signal in the control resource set based on the resource allocation range, the resource allocation field of the PDCCH and the available resource used for transmitting the channel/signal in the control resource set.

In an embodiment, the processing module is configured to determine a resource occupied by the PDSCH in the available resource used for transmitting the channel/signal in the control resource set based on the resource allocation range, the resource allocation field of the PDCCH and the available resource used for transmitting the channel/signal in the control resource set.

In an embodiment, the processing module is configured to perform rate dematching and resource demapping based on the resource occupied by the PDSCH in the available resource used for transmitting the channel/signal in the control resource set.

In an embodiment, a receiving module is configured to receive a downlink channel/signal based on the resource occupied by the PDSCH in the available resource used for transmitting the channel/signal in the control resource set.

In an embodiment, the processing module is configured to perform rate dematching and resource demapping based on a resource indicated by the resource allocation field of the PDCCH.

In an embodiment, the receiving module is configured to receive a downlink channel/signal based on the available resource used for transmitting the channel/signal in the control resource set.

In an embodiment, the processing module is configured to fill a transmission symbol mapped outside the available resource used for transmitting the channel/signal in the control resource set.

In an embodiment, the resource allocation range is determined based on the resource range of the control resource set, the terminal receives the PDSCH within the system bandwidth, or the terminal receives all resources allocated by the terminal for the PDSCH.

In an embodiment, the available resource used for transmitting the channel/signal in the control resource set is determined based on the system bandwidth and/or a resource of the control resource set.

In an embodiment, the processing module is configured to perform, in response to the resource allocation including allocating a virtual resource block for the PDSCH, a mapping from the virtual resource block to a physical resource block based on the resource allocation range.

A fourth aspect of the embodiments of the present disclosure provides a resource allocation apparatus, where the apparatus includes:
a processing module, configured to determine that a bandwidth configured for a control resource set is greater than a system bandwidth, and obtain an allocation resource allocated by a terminal, based on a resource allocation range, to a physical downlink shared channel PDSCH;
a sending module, configured to send the PDSCH based on the allocation resource of the PDSCH.

In an embodiment, the resource allocation range is determined based on at least one of the following:
the system bandwidth;
a resource range of the control resource set;
an available resource used for transmitting a channel/signal in the control resource set.

In an embodiment, the allocation resource is determined based on the resource allocation range and a resource allocation field of a physical downlink control channel PDCCH, and the resource allocation field of the PDCCH is used for indicating a resource allocation amount and a resource position of the PDSCH within the resource allocation range.

In an embodiment, the resource allocation range is determined based on the system bandwidth, the system bandwidth is determined based on indication information, and the indication information is carried in a master information block MIB; or
the system bandwidth is determined based on a frequency band bandwidth corresponding to an operation frequency band of the terminal.

In an embodiment, the resource allocation range is determined based on the resource range of the control resource set, and the resource range of the control resource set includes the available resource used for transmitting the channel/signal.

In an embodiment, a resource, occupied by the PDSCH in the available resource used for transmitting the channel/signal in the control resource set, is determined based on the resource allocation range, the resource allocation field of the PDCCH and the available resource used for transmitting the channel/signal in the control resource set.

In an embodiment, the processing module is configured to perform rate matching and resource mapping based on the resource occupied by the PDSCH in the available resource used for transmitting the channel/signal in the control resource set.

In an embodiment, the sending module is configured to send a downlink channel/signal based on the resource occupied by the PDSCH in the available resource used for transmitting the channel/signal of the control resource set.

In an embodiment, the processing module is configured to perform rate matching and resource mapping based on a resource indicated by the resource allocation field of the PDCCH.

In an embodiment, the sending module is configured to send a downlink channel/signal based on the available resource used for transmitting the channel/signal in the control resource set.

In an embodiment, the processing module is configured to discard a transmission symbol mapped outside the available resource used for transmitting the channel/signal in the control resource set.

In an embodiment, the available resource used for transmitting the channel/signal in the control resource set is determined based on the system bandwidth and/or a resource of the control resource set.

A fifth aspect of the embodiments of the present disclosure provides a resource allocation apparatus, including: a processor; a memory configured to store an instruction executable by the processor; where the processor is configured to perform the method according to the foregoing first aspect or any embodiment thereof.

A sixth aspect of the embodiments of the present disclosure provides a resource allocation apparatus, including: a processor; a memory configured to store an instruction executable by the processor; where the processor is configured to perform the method according to the foregoing second aspect or any embodiment thereof.

A seventh aspect of the embodiments of the present disclosure provides a storage medium, where the storage medium stores an instruction, and when the instruction in the storage medium is executed by a processor of a terminal, the terminal is enabled to execute the method according to the foregoing first aspect above or any embodiment thereof.

An eighth aspect of the embodiments of the present disclosure provides a storage medium, where the storage medium stores an instruction, and when the instruction in the storage medium is executed by a processor of a network device, the network device is enabled to execute the method according to the foregoing second aspect or any embodiment thereof.

A ninth aspect of the embodiments of the present disclosure provides a communication system, including a terminal and a network device, where the terminal is configured to execute the method according to the foregoing first aspect or any embodiment thereof; the network device is configured to execute the method according to the foregoing second aspect or any embodiment thereof.

The technical solution according to some embodiments of the present disclosure may include the following beneficial effects. When the bandwidth of the control resource set configured by the network device is greater than the system bandwidth, the resource allocation range of the PDSCH is determined, and the resources of the PDSCH are allocated based on the resource allocation range, so that the network device can transmit the PDSCH based on the resources allocated to the PDSCH, thereby improving the transmission reliability of the PDSCH.

It should be understood that the foregoing general description and the following detailed description are exemplary and explanatory only and are not restrictive of the embodiments of the present disclosure.

### BRIEF DESCRIPTION OF THE DRAWINGS

The accompanying drawings, which are incorporated in and constitute a part of this specification, illustrate embodiments consistent with the present invention and, together with the description, serve to explain the principles of the embodiments of the present invention.
FIG. 1 is a schematic structural diagram of a wireless communication system according to an exemplary embodiment.
FIG. 2 is a schematic flow chart of a resource allocation method according to an exemplary embodiment.
FIG. 3 is a schematic flow chart of a resource allocation method according to an exemplary embodiment.
FIG. 4 is a schematic flow chart of a resource determination method according to an exemplary embodiment.
FIG. 5 is a schematic flow chart of a resource allocation method according to an exemplary embodiment.
FIG. 6 is a schematic flow chart of a data processing method according to an exemplary embodiment.
FIG. 7 is a schematic flow chart of a data transmission method according to an exemplary embodiment.
FIG. 8 is a schematic flow chart of a data processing method according to an exemplary embodiment.
FIG. 9 is a schematic flow chart of a resource allocation method according to an exemplary embodiment.
FIG. 10 is a schematic flow chart of a data processing method according to an exemplary embodiment.
FIG. 11 is a schematic flow chart of a resource mapping method according to an exemplary embodiment.
FIG. 12 is a schematic flow chart of a resource allocation method according to an exemplary embodiment.
FIG. 13 is a schematic flow chart of a data processing method according to an exemplary embodiment.
FIG. 14 is a schematic flow chart of a data transmission method according to an exemplary embodiment.
FIG. 15 is a schematic flow chart of a data processing method according to an exemplary embodiment.
FIG. 16 is a schematic flow chart of a resource allocation method according to an exemplary embodiment.
FIG. 17 is a schematic flow chart of a data processing method according to an exemplary embodiment.
FIG. 18 is a block diagram of a resource allocation apparatus according to an exemplary embodiment.
FIG. 19 is a block diagram of a resource allocation apparatus according to an exemplary embodiment.
FIG. 20 is a block diagram for a resource allocation apparatus according to an exemplary embodiment.
FIG. 21 is a block diagram for a resource allocation apparatus according to an exemplary embodiment.

### DETAILED DESCRIPTION

Here, exemplary embodiments will be described in detail, examples of which are shown in the accompanying drawings. When the following description refers to the drawings, unless otherwise indicated, the same numbers in different drawings represent the same or similar elements. The implementations described in the following exemplary embodiments do not represent all implementations consistent with the embodiments of the present invention.

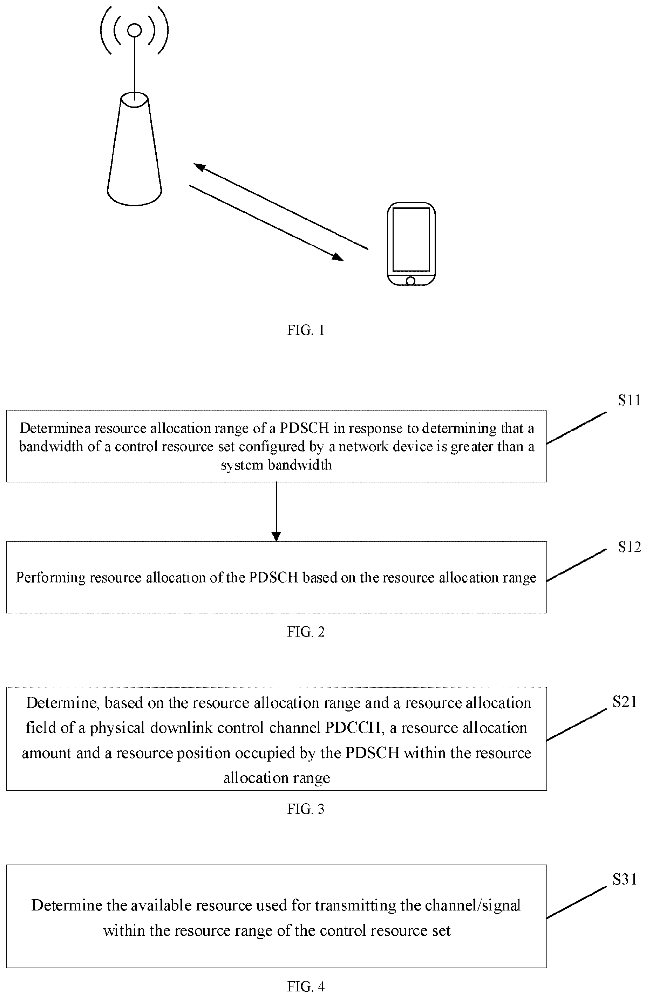

The bandwidth determination method described in the present disclosure can be applied to the wireless communication system shown in FIG. 1. The network system may include network devices and terminals. It can be understood that the wireless communication system shown in FIG. 1 is only for schematic illustration, and the wireless communication system may also include other network devices, for example, core network devices, wireless relay devices, and wireless backhaul devices, which are not shown in FIG. 1. The embodiments of the present disclosure do not limit the number of network devices and terminals included in the wireless communication system.

It can be further understood that the wireless communication system of the embodiment of the present disclosure is a network providing wireless communication functions. The wireless communication system can adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), carrier sense multiple access with collision avoidance. According to the capacity, rate, delay and other factors of different networks, the networks can be classified as 2G (English: Generation) network, 3G network, 4G network or future evolution network, such as the fifth generation wireless communication system (5G) network, and the 5G network can also be called New Radio (NR). For the convenience of description, the present disclosure sometimes simply refers to a wireless communication network as a network.

Further, the network device involved in the present disclosure may also be referred to as a wireless access network device. The wireless access network device may be a base station, an evolved Node B (eNB), a home base station, an access point (AP) in a wireless fidelity (WIFI) system, a wireless relay node, a wireless backhaul node, a transmission point (TP), a transmission and receiving point (TRP), or the like. The wireless access network device may also be a gNB in an NR system, or it may also be a component or part of the equipment that constitutes the base station or the like. When the network device is a vehicle-to-vehicle (V2X) communication system, the network device may also be a vehicle-mounted device. It should be understood that in the embodiments of the present disclosure, the specific technology and specific device form adopted by the network device are not limited.

Furthermore, the terminal involved in the present disclosure may also be referred to as a terminal device, a user equipment (UE), a mobile station (MS), a mobile terminal (MT) and the like, which is a device providing voice and/or data connectivity to users. For example, the terminal may be a handheld device with a wireless connection function, a vehicle-mounted device and the like. At present, some examples of terminals include a mobile phone, a pocket personal computer (PPC), a handheld computer, a personal digital assistant (PDA), a laptop computer, a tablet computer, a wearable device, or a vehicle-mounted device or the like. In addition, when the wireless communication system is a vehicle-to-everything (V2X) communication system, the terminal device may also be a vehicle-mounted device. It should be understood that the embodiments of the present disclosure do not limit the specific technology and specific device form adopted by the terminal.

In the embodiments of the present disclosure, the network device and the terminal may use any feasible wireless communication technology to achieve mutual data transmission. Herein, the transmission channel corresponding to the network device sending data or control information to the terminal is called a downlink (DL), and the transmission channel corresponding to the terminal sending data or control information to the network device is called an uplink (UL). It can be understood that the network device involved in the embodiments of the present disclosure may be a base station. The network device may also be any other possible network device, and the terminal may be any possible terminal, which is not limited by the present disclosure.

In the new radio (NR) system, when a terminal is to transmit a downlink channel/signal, the channel/signal is transmitted through a control resource set (CORESET).

It can be understood that the transmission channel involved in the present disclosure can be understood as transmitting corresponding data on corresponding time domain and frequency domain resources, and the data path formed by transmitting the data is the above-mentioned channel. For example, the network device transmits downlink control information on corresponding time domain and frequency domain resources, thereby forming a data path for transmitting downlink control information, which is the physical downlink control channel (PDCCH). Then the transmission of the downlink control information can also be interpreted as the transmission of PDCCH.

In the control resource set 0, control resource set 0 is a special form of control resource set. Control resource set 0 is mainly used to transmit physical downlink control channel (PDCCH). The frequency domain resources of control resource set 0 are mainly determined based on indication of the PDCCH-ConfigSIB1 information field in MIB. The PDCCH-ConfigSIB1 information field can indicate the number of resources of control resource set 0, the number of occupied OFDM symbols, and the offset relative to the primary synchronization signal (PSS)/secondary synchronization signal (SSS), as shown in Table 2 below.

**Table 1**

| Index | Synchronization signal/physical broadcast channel and control resource set multiplexing mode | Number of resources | Number of symbols | Offset |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | Reserved | | | |

The number of resources represents the number of frequency domain resources configured by the network device for control resource set 0, the number of symbols represents the number of time domain resources (OFDM symbols) configured by the network device for control resource set 0, and the offset represents the offset between the frequency domain resources corresponding to the current control resource set and the primary synchronization signal (PSS)/secondary synchronization signal (SSS). The frequency domain position of the control resource set can be determined based on the offset.

At present, it is considered that the frequency bands with smaller system bandwidth supported by the terminal support NR technology. These frequency bands mainly provide services for dedicated services such as dedicated communications, public protection and disaster relief of power systems/railway systems in some countries and regions, such as frequency bands with band numbers n8, n26, n28 and n100. In general, the system bandwidth supported by n8, n26, and n28 is 3 MHz, and the system bandwidth supported by n100 is 2.8 MHz~3.6MHz. Since the system bandwidths supported by n8, n26, n28 and n100 are small, fewer resources can be transmitted on the frequency bands thereof, and the number of available PRBs is generally around 15. However, the minimum number of PRBs configured for the configuration of control resource set 0 in related art is 24. In this case, the bandwidth of control resource set 0 configured by the network device is greater than the system bandwidth.

Currently, resource allocation of the PDSCH is limited to the resource range of the control resource set 0. However, when the bandwidth of the control resource set 0 is greater than the system bandwidth, how to determine the resource allocation range of the PDSCH is a problem that is to be solved.

FIG. 2 is a flow chart showing a resource allocation method according to an exemplary embodiment. As shown in FIG. 2, the resource allocation method is executed by a terminal and includes the following step(s).

In step S11, in response to determining that the bandwidth configured by the network device for the control resource set is greater than the system bandwidth, a resource allocation range of the PDSCH is determined.

The bandwidth of the control resource set is determined based on the number of resources configured by the network device for the control resource set.

In an embodiment, the resources configured by the network device for the control resource set are frequency domain resources, such as the number of PRBs.

In an embodiment, the control resource set is control resource set 0, which is used to carry a common control channel.

In step S12, resource allocation of the PDSCH is performed based on the resource allocation range.

In some embodiments of the present disclosure, when the bandwidth configured by the network device for the control resource set is greater than the system bandwidth, the resource allocation range of the PDSCH is determined, and resource allocation of the PDSCH is performed based on the resource allocation range, so that the network device can transmit the PDSCH based on the resources allocated to the PDSCH, thereby improving the transmission reliability of the PDSCH.

In a resource allocation method according to some embodiments of the present disclosure, it is determined that the bandwidth configured by the network device for the control resource set is less than or equal to the system bandwidth, and the resource allocation range of the PDSCH can be determined to be the bandwidth of the control resource set.

The embodiments of the present disclosure also provide a resource allocation method, as shown in FIG. 3, including the following step(s).

In step S21, based on the resource allocation range and the resource allocation field of the PDCCH, the resource allocation amount and resource position occupied by the PDSCH within the resource allocation range are determined.

The resource allocation field of the PDCCH is used to indicate the resource allocation amount and resource position of the PDSCH within the resource allocation range.

Exemplarily, the resource allocation field of the PDCCH is used to indicate that the resource allocation amount of the PDSCH in the resource allocation range is 10 PRBs, and the resource position is the second PRB. Then the resources allocated to the PDCCH include 10 PRBs after the second PRB in the resource allocation range.

In some embodiments of the present disclosure, step S21 may be implemented in combination with step S11 shown in FIG. 2, or may be implemented separately.

In some embodiments of the present disclosure, the resource allocation amount and resource position occupied by the PDSCH within the resource allocation range are determined through the resource allocation range and the resource allocation field of the PDCCH, so that the network device transmits the PDSCH based on the resource allocation amount and resource position occupied by the PDSCH within the resource allocation range, thereby improving the reliability of the PDSCH transmission.

In a resource allocation method according to some embodiments of the present disclosure, a resource allocation range of a PDSCH is determined based on at least one of the following:
a system bandwidth;
a resource range of the control resource set;
an available resource, used for transmitting the channel/signal, in the control resource set.

In an embodiment, the resource allocation range is the resource range corresponding to the system bandwidth, and the PDSCH resource allocation is performed within the system bandwidth.

In an embodiment, the resource allocation range is a resource range corresponding to a control resource set, and PDSCH resource allocation is performed within the resource range of the control resource set.

The resource range of the control resource set indicates the resources configured by the network device for the control resource set.

In an embodiment, the resource allocation range is a resource range corresponding to available resources, used for transmitting channels/signals, in the control resource set, and the PDSCH resource allocation is performed within the available resources, used for transmitting channels/signals, in the control resource set.

The available resources, used for transmitting channels/signals, in the control resource set represent the resources that can actually transmit channels/signals in the control resource set. Because the bandwidth configured by the network device for the control resource set is greater than the system bandwidth, the resources configured by the network device for the control resource set cannot be fully carried in the system bandwidth. Only part of the resources configured by the network device for the control resource set, that is, the resources that can actually transmit channels/signals, are in the system bandwidth. Resources outside the system bandwidth cannot transmit channels/signals.

In an embodiment, the resource allocation range of the PDSCH can be determined by the terminal based on one or more of the system bandwidth, the resource range of the control resource set, and available resources, used for transmitting channels/signals, in the control resource set, which are not limited in the embodiments of the present disclosure. The method for determining the resource allocation range of the PDSCH involved below is only for illustrative purposes.

In some embodiments of the present disclosure, when the bandwidth of the control resource set is greater than the system bandwidth, by determining the resource allocation range of the PDSCH, the resource allocation of the PDSCH is performed based on the resource allocation range, so that the network device can transmit the PDSCH based on the resources allocated to the PDSCH, thereby improving the transmission reliability of the PDSCH.

In a resource allocation method according to some embodiments of the present disclosure, a resource allocation range is determined based on a system bandwidth.

In some embodiments, the system bandwidth is determined based on the indication information.

In an embodiment, the indication information is carried in a master information block MIB.

Exemplarily, the system bandwidth is indicated based on spare bits in the MIB or an information field indicating the subcarrier spacing.

In some other embodiments, the system bandwidth is determined based on a frequency band bandwidth corresponding to an operation frequency band of the terminal.

Exemplarily, the system bandwidth is determined based on a frequency band bandwidth corresponding to an operation frequency band of the terminal or a minimum frequency band bandwidth corresponding to an operation frequency band of the terminal.

For example, the system bandwidth is determined based on the lowest frequency point corresponding to a synchronization signal block (SSB) and the minimum frequency band bandwidth corresponding to an operation frequency band of the terminal.

For example, it is determined that the lowest frequency point corresponding to the SSB is x, and the minimum frequency band bandwidth corresponding to an operation frequency band of the terminal is Y, then the system bandwidth is between x and x+Y.

In some embodiments of the present disclosure, when the bandwidth of the control resource set is greater than the system bandwidth, PDSCH resource allocation may be performed based on the system bandwidth, so that the network device can transmit PDSCH based on the resources allocated to PDSCH, thereby improving the transmission reliability of PDSCH.

In a resource allocation method according to some embodiments of the present disclosure, a resource allocation range is determined based on a resource range of a control resource set, and PDSCH resource allocation is performed within the resource range of the control resource set. However, since the bandwidth of the control resource set is greater than the system bandwidth, only part of the resources in the control resource set can actually transmit channels/signals. Based on this, an embodiment of the present disclosure also provides a resource determination method, as shown in FIG. 4, including the following step(s).

In step S31, available resources for transmitting channels/signals are determined within the resource range of the control resource set.

In some embodiments, available resources, for transmitting a channel/signal, in a control resource set are determined based on system bandwidth and/or resources of the control resource set.

In an embodiment, available resources, for transmitting channels/signals, in the control resource set are determined based on the system bandwidth.

Exemplarily, the system bandwidth is determined, and the available resources, used for transmitting channels/signals, in the control resource set are determined based on the number of resources that the system bandwidth can carry. For example, the system bandwidth is 3.8 MHz and the number of resources that can be carried in the system bandwidth is 18, then the available resources, used for transmitting channels/signals, in the control resource set are also 18.

In an embodiment, available resources, used for transmitting channels/signals, in the control resource set are determined based on resources of the control resource set.

Exemplarily, the resources of the control resource set are determined based on first indication information of the MIB, and the available resources, for transmitting channels/signals, in the control resource set are determined based on second indication information of the MIB and the resources of the control resource set. For example, the resources of the control resource set are determined based on the PDCCH-ConfigSIB1 information field of the MIB, and reference may be made to Table 1 above. The available resources, for transmitting channels/signals, in the control resource set are determined based on the spare information field in the MIB and the resources of the control resource set.

Exemplarily, the spare information field indicates that the number of available resources in the control resource set is 14, and the number of resources in the control resource set is 24, then the available resources, used for transmitting channels/signals, in the control resource set are 14 resources in the 24 resources.

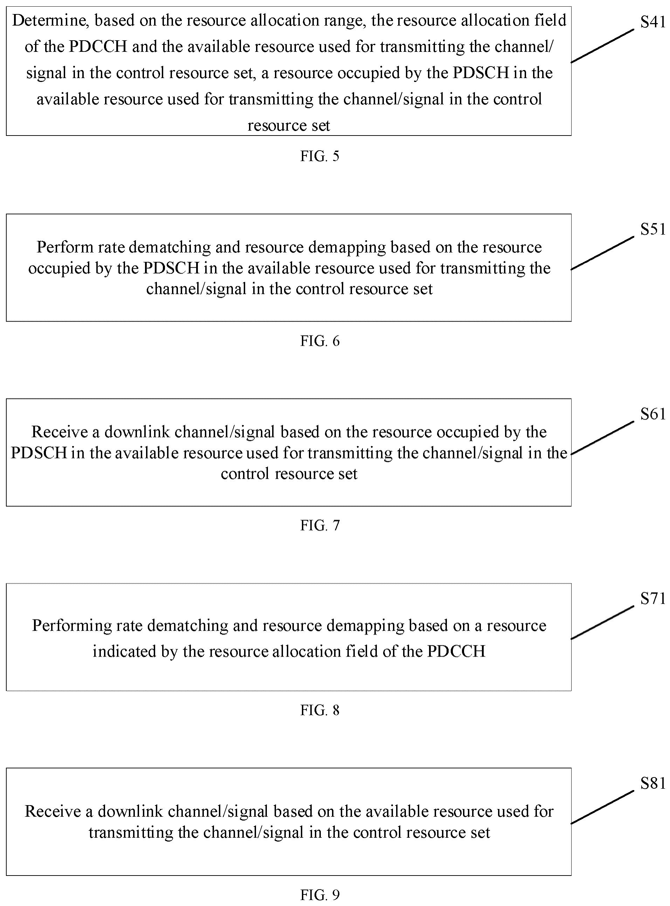

The embodiments of the present disclosure also provide a resource allocation method, as shown in FIG. 5, including the following step(s).

In step S41, based on the resource allocation range, the resource allocation field of the PDCCH and the available resources, used for transmitting channels/signals, in the control resource set, the resources occupied by the PDSCH in the available resources, for transmitting channels/signals, in the control resource set are determined.

Exemplarily, the resource allocation range is determined based on the resource range of the control resource set, the resource range of the control resource set includes PRB2 to PRB25, the resources of PDSCH indicated by the resource allocation field of PDCCH include PRB14 to PRB20, and the available resources, used for transmitting channels/signals, in the control resource set include PRB2 to PRB17. It can be seen that the resources occupied by PDSCH in the available resources, used for transmitting channels/signals, in the control resource set include only PRB 14 to PRB17.

In some embodiments of the present disclosure, the resources occupied by the PDSCH in the available resources, used for transmitting channels/signals, in the control resource set are jointly determined based on the resource allocation range, the resource allocation field of the PDCCH, and the available resources, used for transmitting channels/signals, in the control resource set, thereby ensuring that the resources allocated to the PDSCH are located in the resources occupied by the available resources, used for transmitting channels/signals, in the control resource set, thereby improving the transmission reliability of the PDSCH.

The embodiments of the present disclosure also provide a data processing method, as shown in FIG. 6, including the following step(s).

In step S51, rate dematching and resource demapping are performed based on the resources occupied by the PDSCH in the available resources, used for transmitting channels/signals, in the control resource set.

The process of rate dematching is opposite to rate matching, and is actually the inverse process of rate matching, including recovering the discarded bits or discarding the duplicate bits.

Resource demapping is the opposite of the resource mapping process. The terminal determines, through resource demapping, the mapping position(s) of the time-frequency resources that actually carry the PDSCH data in the PDSCH resources.

In an embodiment, the network device performs rate matching and resource mapping based on the resources occupied by PDSCH in the available resources, for transmitting channels/signals, in the control resource set. For example, the resources occupied by PDSCH in the available resources, used for transmitting channels/signals, in the control resource set include PRB14 to PRB17, the network device performs rate matching according to 4 PRBs and performs resource mapping in PRB 14 to PRB 17. Similarly, the terminal performs rate dematching according to 4 PRBs and performs resource demapping in PRB14 to PRB17.

The embodiments of the present disclosure also provide a data transmission method, as shown in FIG. 7, including the following step(s).

In step S61, a downlink channel/signal is received based on resources occupied by the PDSCH in available resources, used for transmitting the channel/signal, in the control resource set.

Exemplarily, the resources occupied by the PDSCH in the available resources, used for transmitting channels/signals, in the control resource set include PRB14 to PRB17, then the terminal receives channels/signals based on PRB14 to PRB17.

In some embodiments of the present disclosure, step S61 may be implemented alone or in combination with any of the above embodiments, which is not limited in the embodiments of the present disclosure.

The embodiments of the present disclosure also provide a data processing method, as shown in FIG. 8, including the following step(s).

In step S71, rate dematching and resource demapping are performed based on the resources indicated by the resource allocation field of the PDCCH.

In an embodiment, the network device performs rate matching and resource mapping based on the resources indicated by the resource allocation field of the PDCCH. For example, the resources indicated by the resource allocation field of the PDCCH include PRB2 to PRB17, the network device performs rate matching according to 16 PRBs and performs resource mapping in PRB2 to PRB17. Similarly, the terminal performs rate dematching according to 16 PRBs and performs resource demapping in PRB2 to PRB17.

In some embodiments of the present disclosure, step S71 may be implemented alone or in combination with any combinable embodiments of the present disclosure, which is not limited in the embodiments of the present disclosure.

In a resource allocation method according to some embodiments of the present disclosure, as shown in FIG. 9, the resource allocation method includes the following step(s).

In step S81, a downlink channel/signal is received based on available resources, used for transmitting the channel/signal, in the control resource set.

Exemplarily, the available resources, used for transmitting channels/signals, in the control resource set include PRB5 to PRB17, the terminal receives the channel/signal based on PRB5 to PRB17.

In some embodiments of the present disclosure, step S81 may be implemented alone or in combination with any of the above embodiments, which is not limited in the embodiments of the present disclosure.

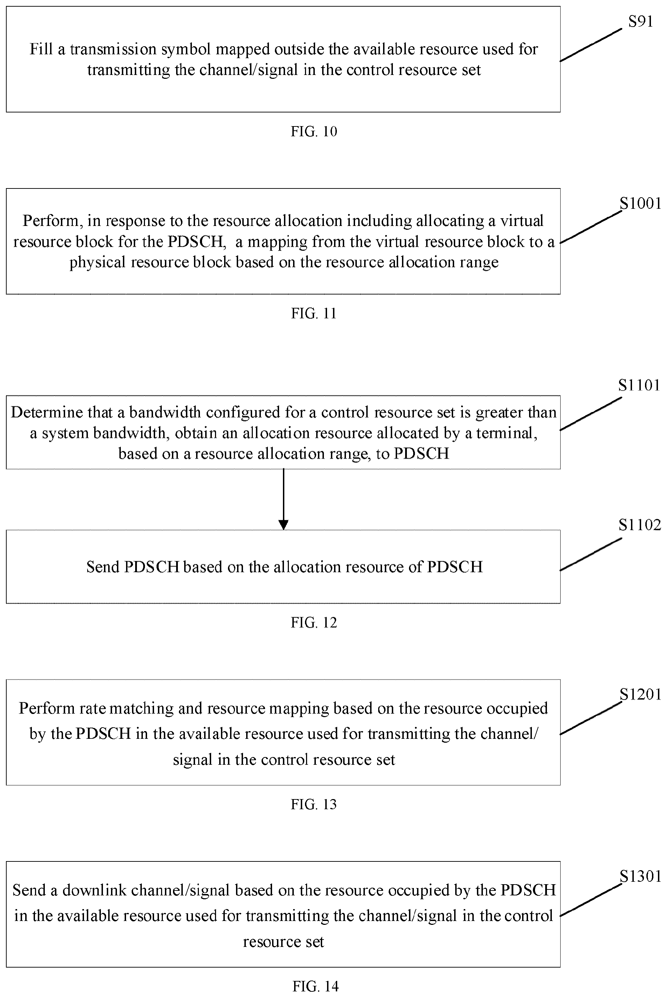

The embodiments of the present disclosure also provide a data processing method, as shown in FIG. 10, including the following step(s).

In step S91, transmission symbols mapped outside the available resources, used for transmitting channels/signals, in the control resource set are filled.

In some embodiments of the present disclosure, step S91 may be implemented alone or in combination with the above-mentioned step S81, which is not limited in the embodiments of the present disclosure.

In a resource allocation method according to some embodiments of the present disclosure, a resource allocation range is determined based on a resource range of a control resource set, and a terminal receives a PDSCH within a system bandwidth, or the terminal is able to receive all resources allocated by the terminal for the PDSCH.

In some embodiments of the present disclosure, the terminal does not expect to receive the PDSCH outside the system bandwidth, or the terminal expects that all resources allocated to the terminal for transmitting the PDSCH can be received by the terminal.

The embodiments of the present disclosure also provide a resource mapping method, as shown in FIG. 11, including the following step(s).

In step S1001, in response to resource allocation including allocating virtual resource blocks for a PDSCH, mapping of the virtual resource blocks to physical resource blocks is performed based on a resource allocation range.

In an embodiment, when performing resource allocation, a virtual resource block (VRB) may be allocated, and information carried in the PRB may be obtained by the network device and the terminal through mapping the VRB to a physical resource block (PRB) according to a pre-agreed interleaver.

In some embodiments of the present disclosure, step S1001 may be implemented alone or in combination with any of the above embodiments, which is not limited in the embodiments of the present disclosure.

Based on the same concept, embodiments of the present disclosure also provides a resource allocation method executed by a network device.

FIG. 12 is a flow chart of a resource allocation method according to an exemplary embodiment. As shown in FIG. 12, the resource allocation method is executed by a network device and includes the following step(s).

In step S1101, it is determined that the bandwidth configured for the control resource set is greater than the system bandwidth, and the allocated resources allocated by the terminal to the PDSCH based on the resource allocation range are acquired.

In an embodiment, the resources configured by the network device for the control resource set are frequency domain resources, such as the number of PRBs.

In an embodiment, the control resource set is control resource set 0.

In step S1102, the PDSCH is sent based on the allocated resources of the PDSCH.

In some embodiments of the present disclosure, when the bandwidth configured by the network device for the control resource set is greater than the system bandwidth, the allocated resources allocated by terminal to the PDSCH based on the resource allocation range are obtained, and the PDSCH is sent based on the allocated resources of the PDSCH, so that the network device can transmit the PDSCH based on the resources allocated to the PDSCH, thereby improving the transmission reliability of the PDSCH.

In a resource allocation method according to some embodiments of the present disclosure, it is determined that the bandwidth configured by the network device for the control resource set is less than or equal to the system bandwidth, and the resource allocation range of the PDSCH can be determined to be the bandwidth of the control resource set.

The embodiments of the present disclosure also provide a resource allocation method, where the allocated resources of the PDSCH are determined based on the resource allocation range and the resource allocation field of the PDCCH, and the resource allocation field of the PDCCH is used to indicate the resource allocation amount and resource position of the PDSCH within the resource allocation range.

Exemplarily, the resource allocation field of the PDCCH is used to indicate that the resource allocation amount of the PDSCH in the resource allocation range includes 10 PRBs, and the resource position is the second PRB. Then the resources allocated to the PDCCH include 10 PRBs after the second PRB in the resource allocation range.

In some embodiments of the present disclosure, the network device transmits the PDSCH based on the resource allocation amount and resource position occupied by the PDSCH within the resource allocation range, thereby improving the reliability of the PDSCH transmission.

In a resource allocation method according to some embodiments of the present disclosure, a resource allocation range of a PDSCH is determined based on at least one of the following:
a system bandwidth;
a resource range of the control resource set;
an available resource used for transmitting a channel/signal in the control resource set.

In an embodiment, the resource allocation range is the resource range corresponding to the system bandwidth, and the PDSCH resource allocation is performed within the system bandwidth.

In an embodiment, the resource allocation range is a resource range corresponding to a control resource set, and PDSCH resource allocation is performed within the resource range of the control resource set.

The resource range of the control resource set represents the resources configured by the network device for the control resource set.

In an embodiment, the resource allocation range is a resource range corresponding to available resources, used for transmitting channels/signals, in the control resource set, and PDSCH resource allocation is performed within the available resources, used for transmitting channels/signals, in the control resource set.

The available resources, used for transmitting channels/signals, in the control resource set represent the resources that can actually transmit channels/signals in the control resource set. Because the bandwidth configured by the network device for the control resource set is greater than the system bandwidth, the resources configured by the network device for the control resource set cannot be fully carried in the system bandwidth. Only part of the resources configured by the network device for the control resource set, that is, the resources that can actually transmit channels/signals, are in the system bandwidth. Resources outside the system bandwidth cannot transmit channels/signals.

In an embodiment, the terminal may determine the resource allocation range of the PDSCH based on one or more of the system bandwidth, the resource range of the control resource set, and available resources, used for transmitting channels/signals, in the control resource set, which is not limited in the embodiments of the present disclosure. The manner for determining the resource allocation range of the PDSCH involved below is only for illustrative purposes.

In some embodiments of the present disclosure, when the bandwidth of the control resource set is greater than the system bandwidth, the terminal allocates resources for the PDSCH based on the resource allocation range through determining the resource allocation range of the PDSCH, so that the network device can transmit the PDSCH based on the resources allocated to the PDSCH, thereby improving the transmission reliability of the PDSCH.

In a resource allocation method according to some embodiments of the present disclosure, a resource allocation range is determined based on a system bandwidth.

In some embodiments, the system bandwidth is determined based on the indication information.

In an embodiment, the indication information is carried in a master information block MIB.

Exemplarily, the system bandwidth is indicated based on spare bits in the MIB or an information field indicating the subcarrier spacing.

In some other embodiments, the system bandwidth is determined based on a frequency band bandwidth corresponding to an operation frequency band of the terminal.

Exemplarily, the system bandwidth is determined based on a frequency band bandwidth corresponding to an operation frequency band of the terminal or a minimum frequency band bandwidth corresponding to an operation frequency band of the terminal.

For example, the system bandwidth is determined based on the lowest frequency point corresponding to a synchronization signal block (SSB) and the minimum frequency band bandwidth corresponding to an operation frequency band of the terminal.

For example, it is determined that the lowest frequency point corresponding to the SSB is x, and the minimum frequency band bandwidth corresponding to an operation frequency band of the terminal is Y, then the system bandwidth is between x and x+Y.

In some embodiments of the present disclosure, when the bandwidth of the control resource set is greater than the system bandwidth, the terminal can perform resources allocation for the PDSCH based on the system bandwidth, so that the network device can transmit the PDSCH based on the resources allocated to the PDSCH, thereby improving the transmission reliability of the PDSCH.

In a resource allocation method according to some embodiments of the present disclosure, a resource allocation range is determined based on a resource range of a control resource set, and PDSCH resource allocation is performed within the resource range of the control resource set. However, since the bandwidth of the control resource set is greater than the system bandwidth, only part of the resources in the control resource set can actually transmit channels/signals.

In some embodiments, available resources, used for transmission of a channel/signal, in a control resource are determined based on system bandwidth and/or resources of the control resource set.

In an embodiment, available resources, used for transmitting channels/signals, in the control resource are determined based on the system bandwidth.

Exemplarily, the system bandwidth is determined, and the available resources, used for transmitting channels/signals, in the control resource set are determined based on the number of resources that the system bandwidth can carry. For example, the system bandwidth is 3.8 MHz and the number of resources that can be carried in the system bandwidth is 18, then the number of the available resources, used for transmitting channels/signals, in the control resource are also 18.

In an embodiment, available resources, used for transmitting channels/signals, in the control resource are determined based on resources of the control resource set.

Exemplarily, the resources of the control resource set are determined based on the first indication information of the MIB, and the available resources, used for transmitting channels/signals, in the control resource set are determined based on the second indication information of the MIB and the resources of the control resource set. For example, the resources of the control resource set are determined based on the PDCCH-ConfigSIB1 information field of the MIB, and reference may be made to Table 1 above. The available resources, used for transmitting channels/signals, in the control resource set are determined based on the spare information field in the MIB and the resources of the control resource set.

The embodiments of the present disclosure also provide a resource allocation method, where the resources occupied by the PDSCH in the available resources, used for transmitting channels/signals, in the control resource set are determined based on the resource allocation range, the resource allocation field of the PDCCH and the available resources, used for transmitting channels/signals, in the control resource set.

Exemplarily, the resource allocation range is determined based on the resource range of the control resource set, the resource range of the control resource set includes PRB2 to PRB25, the resources of PDSCH indicated by the resource allocation field of PDCCH include PRB14 to PRB20, and the available resources, used for transmitting channels/signals, in the control resource set include PRB2 to PRB17. It can be seen that the resources occupied by PDSCH in the available resources, used for transmitting channels/signals, in the control resource set include only PRB14 to PRB 17.

In some embodiments of the present disclosure, the terminal can jointly determine the resources occupied by the PDSCH in the available resources, used for transmitting channels/signals, in the control resource set based on the resource allocation range, the resource allocation field of the PDCCH, and the available resources, used for transmitting channels/signals, in the control resource set, thereby ensuring that the resources allocated to the PDSCH are located in the resources occupied by the available resources, used for transmitting channels/signals, in the control resource set, and thus improving the transmission reliability of the PDSCH.

The embodiments of the present disclosure also provide a data processing method, as shown in FIG. 13, including the following step(s).

In step S1201, rate matching and resource mapping are performed based on resources occupied by the PDSCH in available resources, used for transmitting channels/signals, in a control resource set.

In an embodiment, the network device performs rate matching and resource mapping based on the resources occupied by the PDSCH in the available resources, used for transmitting channels/signals, in the control resource set. For example, the resources occupied by the PDSCH in the available resources, used for transmitting channels/signals, in the control resource set include PRB14 to PRB17, the network device performs rate matching according to 4 PRBs and performs resource mapping in PRB14 to PRB17. Similarly, the terminal performs rate dematching according to 4 PRBs and performs resource demapping in PRB14 to PRB17.

The embodiments of the present disclosure also provide a data transmission method, as shown in FIG. 14, including the following step(s).

In step S1301, a downlink channel/signal is sent based on resources occupied by a PDSCH in available resources, used for transmitting channels/signals, in a control resource set.

Exemplarily, the resources occupied by the PDSCH in the available resources, used for transmitting channels/signals, in the control resource set include PRB14 to PRB17, then the terminal receives channels/signals based on PRB14 to PRB17.

In some embodiments of the present disclosure, step S1301 may be implemented alone or in combination with any of the above embodiments, which is not limited in the embodiments of the present disclosure.

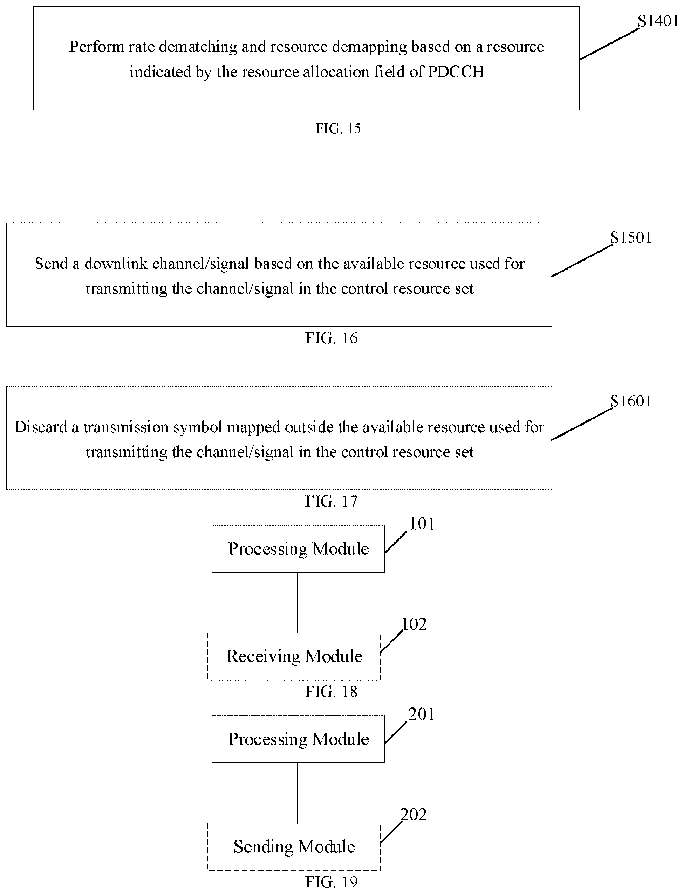

The embodiments of the present disclosure also provide a data processing method, as shown in FIG. 15, including the following steps.

In step S1401, rate dematching and resource demapping are performed based on the resources indicated by the resource allocation field of the PDCCH.

In an embodiment, the network device performs rate matching and resource mapping based on the resources indicated by the resource allocation field of the PDCCH. For example, the resources indicated by the resource allocation field of the PDCCH include PRB2 to PRB17, then the network device performs rate matching according to 16 PRBs and performs resource mapping in PRB2 to PRB17. Similarly, the terminal performs rate dematching according to 16 PRBs and performs resource demapping in PRB2 to PRB17.

In some embodiments of the present disclosure, step S1401 may be implemented alone or in combination with any combinable embodiments of the present disclosure, which is not limited in the embodiments of the present disclosure.

In a resource allocation method according to some embodiments of the present disclosure, as shown in FIG. 16, the resource allocation method includes the following step(s).

In step S1501, a downlink channel/signal is sent based on available resources, used for transmitting the channel/signal, in a control resource set.

Exemplarily, the available resources, used for transmitting channels/signals, in the control resource set include PRB5 to PRB17, then the network device sends the channel/signal based on PRB5 to PRB17.

In some embodiments of the present disclosure, step S1501 may be implemented alone or in combination with any of the above embodiments, which is not limited in the embodiments of the present disclosure.

The embodiments of the present disclosure also provide a data processing method, as shown in FIG. 17, including the following step(s).

In step S1601, transmission symbols mapped outside the available resources, used for transmitting channels/signals, in a control resource set are discarded.

In some embodiments of the present disclosure, step S1601 may be implemented alone or in combination with the above-mentioned step S1501, which is not limited in the embodiments of the present disclosure.

It should be noted that those skilled in the art can understand that the various implementation manners/embodiments involved in the embodiments of the present disclosure can be used in conjunction with the aforementioned embodiments or can be used independently. Whether used alone or in conjunction with the aforementioned embodiments, the implementation principle is similar. In the embodiments of the present disclosure, some embodiments are described in terms of implementation manners used together. Those skilled in the art can understand that such examples are not limitations of the embodiments of the present disclosure.

Based on the same concept, an embodiment of the present disclosure also provides a resource allocation apparatus.

It can be understood that the resource allocation apparatus according to some embodiments of the present disclosure include hardware structures and/or software modules corresponding to the execution of each function in order to realize the above functions. In combination with the units and algorithm steps of each example disclosed in the embodiments of the present disclosure, the embodiments of the present disclosure can be implemented in the form of hardware or a combination of hardware and computer software. Whether a function is executed in the form of hardware or computer software driving hardware depends on the specific application and design constraints of the technical solution. Those skilled in the art may use different ways to implement the described functions for each specific application, but such implementation should not be considered to exceed the scope of the technical solution according to the embodiments of the present disclosure.

FIG. 18 is a block diagram of a resource allocation apparatus according to an exemplary embodiment. Referring to FIG. 18, the apparatus includes a processing module 101.

The processing module 101 is configured to determine that the bandwidth configured by the network device for the control resource set is greater than the system bandwidth, determine the resource allocation range of the physical downlink shared channel PDSCH, and perform resource allocation of the PDSCH based on the resource allocation range.

In an embodiment, the resource allocation range of the PDSCH is determined based on at least one of the following:
a system bandwidth;
a resource range of the control resource set;
an available resource, used for transmitting a channel/signal, in the control resource set.

In an embodiment, the processing module 101 is configured to determine the resource allocation amount and resource position occupied by the PDSCH within the resource allocation range based on the resource allocation range and the resource allocation field of the physical downlink control channel PDCCH, where the resource allocation field of the PDCCH is used to indicate the resource allocation amount and resource position of the PDSCH within the resource allocation range.

In an embodiment, the resource allocation range is determined based on the system bandwidth, the system bandwidth is determined based on the indication information, and the indication information is carried in the master information block MIB; or
the system bandwidth is determined based on the frequency band bandwidth corresponding to an operation frequency band of the terminal.

In an embodiment, the resource allocation range is determined based on a resource range of a control resource set, and the processing module is configured to determine available resources for transmitting a channel/signal within the resource range of the control resource set.

In an embodiment, the processing module 101 is configured to determine resources occupied by the PDSCH in the available resources, used for transmitting channels/signals, in the control resource set based on the resource allocation range, the resource allocation field of the PDCCH, and the available resources, used for transmitting channels/signals, in the control resource set.

In an embodiment, the processing module 101 is configured to perform rate dematching and resource demapping based on available resources, used for transmitting channels/signals, in the control resource set.

In an embodiment, the processing module 101 is configured to perform rate dematching and resource demapping based on the resources indicated by the resource allocation field of the PDCCH.

In an embodiment, a receiving module 102 is configured to receive a downlink channel/signal based on available resources, used for transmitting the channel/signal, in the control resource set.

In an embodiment, the processing module 101 is configured to fill transmission symbols mapped outside available resources, used for transmitting channels/signals, in the control resource.

In an embodiment, the resource allocation range is determined based on the resource range of the control resource set, and the terminal receives the PDSCH within the system bandwidth, or the terminal receives all resources allocated by the terminal for the PDSCH.

In an embodiment, available resources, used for transmitting channels/signals, in the control resource are determined based on system bandwidth and/or resources of the control resource set.

In an embodiment, the processing module 101 is configured to map, in response to resource allocation including allocating virtual resource blocks for the PDSCH, the virtual resource blocks to physical resource blocks based on a resource allocation range.

FIG. 19 is a block diagram of a resource allocation apparatus according to an exemplary embodiment. Referring to FIG. 19, the apparatus includes a processing module 201 and a sending module 202.

The processing module 201 is configured to determine that the bandwidth configured for the control resource set is greater than the system bandwidth, and obtain the allocated resources allocated by the terminal to the physical downlink shared channel PDSCH based on the resource allocation range.

The sending module 202 is configured to send the PDSCH based on the allocated resources of the PDSCH.

In an embodiment, the resource allocation range is determined based on at least one of the following:
a system bandwidth;
a resource range of the control resource set;
an available resource, used for transmitting a channel/signal, in the control resource set.

In an embodiment, the allocated resources are determined based on a resource allocation range and a resource allocation field of a physical downlink control channel PDCCH, where the resource allocation field of the PDCCH is used to indicate a resource allocation amount and a resource position of the PDSCH within the resource allocation range.

In an embodiment, the resource allocation range is determined based on the system bandwidth, the system bandwidth is determined based on the indication information, and the indication information is carried in the master information block MIB; or
the system bandwidth is determined based on a frequency band bandwidth corresponding to an operation frequency band of the terminal.

In an embodiment, the resource allocation range is determined based on the resource range of the control resource set, and the resource range of the control resource set includes available resources used for transmitting channels/signals.

In an embodiment, the resources occupied by the PDSCH in the available resources, used for transmitting channels/signals, in the control resource set are determined based on the resource allocation range, the resource allocation field of the PDCCH, and the available resources, used for transmitting channels/signals, in the control resource set.

In an embodiment, the processing module 201 is configured to perform rate matching and resource mapping based on available resources, used for transmitting channels/signals, in a control resource set.

In an embodiment, the processing module 201 is configured to perform rate matching and resource mapping based on the resources indicated by the resource allocation field of the PDCCH.

In an embodiment, the processing module 201 is configured to send a downlink channel/signal based on available resources, used for transmitting channels/signals in the control resource set.

In an embodiment, the processing module 201 is configured to discard transmission symbols mapped outside available resources, used for transmitting channels/signals, in the control resource.

In an embodiment, available resources, used for transmitting channels/signals, in the control resource are determined based on system bandwidth and/or resources of the control resource set.

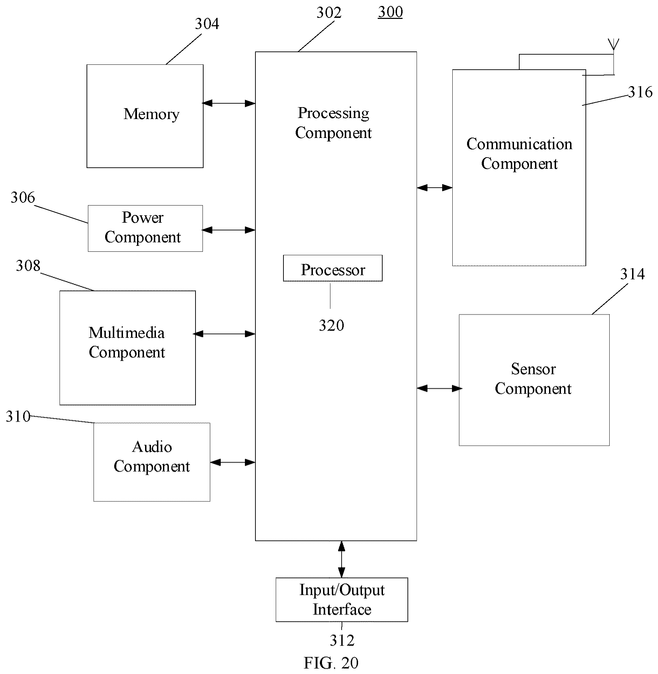

FIG. 20 is a block diagram of a resource allocation apparatus according to an exemplary embodiment. For example, the apparatus 300 may be a mobile phone, a computer, a digital broadcast terminal, a messaging device, a game console, a tablet device, a medical device, a fitness device, a personal digital assistant and the like.

Referring to FIG. 20, the apparatus 300 may include one or more of the following components: a processing component 302, a memory 304, a power component 306, a multimedia component 308, an audio component 310, an input/output (I/O) interface 312, a sensor component 314, and a communication component 316.

The processing component 302 generally controls the overall operation of the apparatus 300, such as operations associated with display, phone calls, data communications, camera operations, and recording operations. The processing component 302 may include one or more processors 320 to execute instructions to complete all or part of the steps of the abovementioned method. In addition, the processing component 302 may include one or more modules to facilitate the interaction between the processing component 302 and other components. For example, the processing component 302 may include a multimedia module to facilitate the interaction between the multimedia component 308 and the processing component 302.

The memory 304 is configured to store various types of data to support operations on the apparatus 300. Examples of such data include instructions for any application or method operating on the apparatus 300, contact data, phone book data, messages, pictures, videos and the like. The memory 304 can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 306 provides power to the various components of the apparatus 300. The power component 306 may include a power management system, one or more power supplies, and other components associated with generating, managing, and distributing power for the apparatus 300.

The multimedia component 308 includes a screen that provides an output interface between the apparatus 300 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 308 includes a front camera and/or a rear camera. When the apparatus 300 is in an operating mode, such as a shooting mode or a video mode, the front camera and/or the rear camera may receive external multimedia data. Each front camera and rear camera may be a fixed optical lens system or may have a focal length and optical zoom capability.

The audio component 310 is configured to output and/or input audio signals. For example, the audio component 310 includes a microphone (MIC), and when the apparatus 300 is in an operating mode, such as a call mode, a recording mode, and a speech recognition mode, the microphone is configured to receive an external audio signal. The received audio signal can be further stored in the memory 304 or sent via the communication component 316. In some embodiments, the audio component 310 also includes a speaker used for outputting audio signals.

I/O interface 312 provides an interface between processing component 302 and peripheral interface modules, the peripheral interface module above may be keyboards, click wheels, buttons and the like. These buttons may include but are not limited to: home button, volume button, start button, and lock button.

The sensor assembly 314 includes one or more sensors used for providing the status assessment in various aspects of the apparatus 300. For example, the sensor assembly 314 can detect the open/closed state of the apparatus 300, the relative positioning of components, such as the display and keypad of the apparatus 300, the sensor assembly 314 can also detect the position change of the apparatus 300 or a component of the apparatus 300, the presence or absence of user contact with the apparatus 300, the orientation or acceleration/deceleration of the apparatus 300, and the temperature change of the apparatus 300. The sensor assembly 314 can include a proximity sensor configured to detect the presence of nearby objects without any physical contact. The sensor assembly 314 can also include an optical sensor, such as a CMOS or CCD image sensor, for use in imaging applications. In some embodiments, the sensor assembly 314 may also include an acceleration sensor, a gyroscope sensor, a magnetic sensor, a pressure sensor, or a temperature sensor.

The communication component 316 is configured to facilitate wired or wireless communication between the apparatus 300 and other devices. The apparatus 300 can access a wireless network based on a communication standard, such as WiFi, 2G or 3G, or a combination thereof. In an exemplary embodiment, the communication component 316 receives a broadcast signal or broadcast-related information from an external broadcast management system via a broadcast channel. In an exemplary embodiment, the communication component 316 also includes a near field communication (NFC) module to facilitate short-range communication. For example, the NFC module can be implemented based on radio frequency identification (RFID) technology, infrared data association (IrDA) technology, ultra-wideband (UWB) technology, bluetooth (BT) technology, and other technologies.

In an exemplary embodiment, the apparatus 300 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an exemplary embodiment, a non-transitory computer-readable storage medium including instructions is also provided, such as a memory 304 including instructions, and the instructions can be executed by a processor 320 of the apparatus 300 to perform the above method. For example, the non-transitory computer-readable storage medium can be a ROM, a random access memory (RAM), a CD-ROM, a magnetic tape, a floppy disk, an optical data storage device and the like.

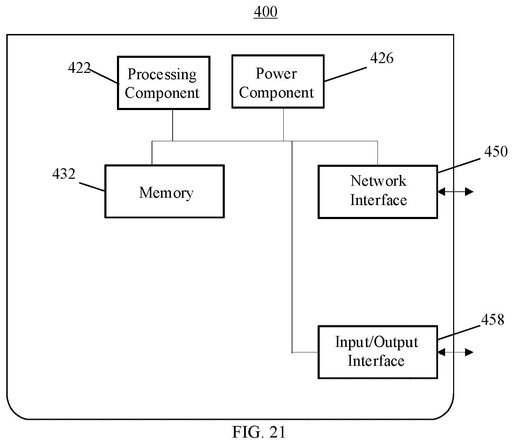

FIG. 21 is a block diagram of a resource allocation apparatus according to an exemplary embodiment. For example, apparatus 400 may be provided as a network device. Referring to FIG. 21, apparatus 400 includes a processing component 422, which further includes one or more processors, and a memory resource represented by a memory 432 used for storing instructions executable by the processing component 422, such as an application. The application stored in the memory 432 may include one or more modules with each module corresponds to a set of instructions. In addition, the processing component 422 is configured to execute instructions to perform the above method.

The apparatus 400 may also include a power supply component 426 configured to perform power management of the apparatus 400, a wired or wireless network interface 450 configured to connect the apparatus 400 to a network, and an input/output (I/O) interface 458. The apparatus 400 may operate based on an operating system stored in the memory 432, such as Windows Server^{™}, Mac OS X^{™}, Unix^{™}, Linux^{™}, FreeBSD^{™}, or the like.

In an exemplary embodiment, a non-transitory computer-readable storage medium including instructions is also provided, such as a memory 432 including instructions, and the instructions can be executed by the processing component 422 of the apparatus 400 to perform the above method. For example, the non-transitory computer-readable storage medium can be a ROM, a random access memory (RAM), a CD-ROM, a magnetic tape, a floppy disk, an optical data storage device and the like.

It can be further understood that "plurality" refers to two or more than two, and other quantifiers are similar in the present disclosure. "And/or" describes the association relationship of associated objects, indicating that three relationships may exist. For example, A and/or B can represent: A exists alone, both A and B exist, and B exists alone. The character "/" generally indicates that the associated objects before and after are in an "or" relationship. The singular forms "a", "the" and "said" are also intended to include the plural forms, unless the context clearly indicates other meanings.

It can be further understood that the meanings of the words "in response to" and "if" involved in the present disclosure depend on the context and the actual usage scenario. For example, the word "in response to" used herein can be interpreted as "upon..." or "when..." or "if'.

It can be further understood that the terms "first", "second" and the like are used to describe various information, but such information should not be limited to these terms. These terms are only used to distinguish the same type of information from each other, and do not indicate a specific order or degree of importance. In fact, the expressions "first", "second" and the like can be used interchangeably. For example, without departing from the scope of the present disclosure, the first information can also be referred to as the second information, and similarly, the second information can also be referred to as the first information.

It can be further understood that although the operations are described in a specific order in the drawings in the embodiments of the present disclosure, it should not be understood as requiring the operations to be performed in the specific order shown or in a serial order, or requiring the execution of all the operations shown to obtain the desired results. In certain environments, multitasking and parallel processing may be advantageous.

Those skilled in the art will readily appreciate other embodiments of the present disclosure after considering the specification and practicing the invention disclosed herein. This application is intended to cover any modifications, uses or adaptations of the present disclosure, which follow the general principles of the present disclosure and include common knowledge or customary technical means in the art that are not disclosed in the present disclosure.

It should be understood that the embodiments of the present disclosure are not limited to the precise structures described above and shown in the drawings, and various modifications and changes may be made without departing from the scope thereof. The scope of the embodiments of the present disclosure is limited only by the appended claims.

## Claims

1. A method for allocating resource, being performed by a terminal, wherein the method comprises:
in response to determining that a bandwidth of a control resource set configured by a network device is greater than a system bandwidth, determining a resource allocation range of a physical downlink shared channel PDSCH;
based on the resource allocation range, performing resource allocation of the PDSCH.

2. The method according to claim 1, wherein the resource allocation range of the PDSCH is determined based on at least one of the following:
the system bandwidth;
a resource range of the control resource set;
an available resource used for transmitting a channel/signal in the control resource set.

3. The method according to claim 2, wherein based on the resource allocation range, performing the resource allocation of the PDSCH comprises:
based on the resource allocation range and a resource allocation field of a physical downlink control channel PDCCH, determining a resource allocation amount and a resource position occupied by the PDSCH within the resource allocation range; wherein the resource allocation field of the PDCCH is used for indicating the resource allocation amount and the resource position of the PDSCH within the resource allocation range.

4. The method according to claim 2, wherein the resource allocation range is determined based on the system bandwidth, the system bandwidth is determined based on indication information, and the indication information is carried in a master information block MIB; or
the system bandwidth is determined based on a frequency band bandwidth corresponding to an operation frequency band of the terminal.

5. The method according to claim 3, wherein the resource allocation range is determined based on the resource range of the control resource set, and the method further comprises:
determining the available resource used for transmitting the channel/signal within the resource range of the control resource set.

6. The method according to claim 5, wherein the method further comprises:
based on the resource allocation range, the resource allocation field of the PDCCH and the available resource used for transmitting the channel/signal in the control resource set, determining a resource occupied by the PDSCH in the available resource used for transmitting the channel/signal in the control resource set.

7. The method according to claim 6, wherein the method further comprises:
performing rate dematching and resource demapping based on the resource occupied by the PDSCH in the available resource used for transmitting the channel/signal in the control resource set.

8. The method according to claim 7, wherein the method further comprises:
receiving a downlink channel/signal based on the resource occupied by the PDSCH in the available resource used for transmitting the channel/signal in the control resource set.

9. The method according to claim 6, wherein the method further comprises:
performing rate dematching and resource demapping based on a resource indicated by the resource allocation field of the PDCCH.

10. The method according to claim 9, wherein the method further comprises:
receiving a downlink channel/signal based on the available resource used for transmitting the channel/signal in the control resource set.

11. The method according to claim 10, wherein the method comprises:
filling a transmission symbol mapped outside the available resource used for transmitting the channel/signal in the control resource set.

12. The method according to claim 2, wherein the resource allocation range is determined based on the resource range of the control resource set, the terminal receives the PDSCH within the system bandwidth, or the terminal receives all resources allocated by the terminal for the PDSCH.

13. The method according to any one of claims 2 to 12, wherein the available resource used for transmitting the channel/signal in the control resource set is determined based on the system bandwidth and/or a resource of the control resource set.

14. The method according to any one of claims 1 to 13, wherein the method further comprises:
in response to the resource allocation comprising allocating a virtual resource block for the PDSCH, performing a mapping from the virtual resource block to a physical resource block based on the resource allocation range.

15. A method for allocating resource, being performed by a network device, wherein the method comprises:
determining that a bandwidth configured for a control resource set is greater than a system bandwidth, obtaining an allocation resource allocated by a terminal, based on a resource allocation range, to a physical downlink shared channel PDSCH;
sending the PDSCH based on the allocation resource of the PDSCH.

16. The method according to claim 15, wherein the resource allocation range is determined based on at least one of the following:
the system bandwidth;
a resource range of the control resource set;
an available resource used for transmitting a channel/signal in the control resource set.

17. The method according to claim 16, wherein the allocation resource is determined based on the resource allocation range and a resource allocation field of a physical downlink control channel PDCCH, and the resource allocation field of the PDCCH is used for indicating a resource allocation amount and a resource position of the PDSCH within the resource allocation range.

18. The method according to claim 16, wherein the resource allocation range is determined based on the system bandwidth, the system bandwidth is determined based on indication information, and the indication information is carried in a master information block MIB; or
the system bandwidth is determined based on a frequency band bandwidth corresponding to an operation frequency band of the terminal.

19. The method according to claim 17, wherein the resource allocation range is determined based on the resource range of the control resource set, and the resource range of the control resource set comprises the available resource used for transmitting the channel/signal.

20. The method according to claim 19, wherein a resource, occupied by the PDSCH in the available resource used for transmitting the channel/signal in the control resource set, is determined based on the resource allocation range, the resource allocation field of the PDCCH and the available resource used for transmitting the channel/signal in the control resource set.

21. The method according to claim 20, wherein the method further comprises:
performing rate matching and resource mapping based on the resource occupied by the PDSCH in the available resource used for transmitting the channel/signal in the control resource set.

22. The method according to claim 21, wherein the method further comprises:
sending a downlink channel/signal based on the resource occupied by the PDSCH in the available resource used for transmitting the channel/signal in the control resource set.

23. The method according to claim 19, wherein the method further comprises:
performing rate matching and resource mapping based on a resource indicated by the resource allocation field of the PDCCH.

24. The method according to claim 23, wherein the method further comprises:
sending a downlink channel/signal based on the available resource used for transmitting the channel/signal in the control resource set.

25. The method according to claim 24, wherein the method further comprises:
discarding a transmission symbol mapped outside the available resource used for transmitting the channel/signal in the control resource set.

26. The method according to any one of claims 16 to 25, wherein the available resource used for transmitting the channel/signal in the control resource set is determined based on the system bandwidth and/or a resource of the control resource set.

27. A resource allocation apparatus, wherein the apparatus comprises:
a processing module, configured to determine that a bandwidth of a control resource set configured by a network device is greater than a system bandwidth, determine a resource allocation range of a physical downlink shared channel PDSCH; based on the resource allocation range, perform resource allocation of the PDSCH.

28. A resource allocation apparatus, wherein the apparatus comprises:
a processing module, configured to determine that a bandwidth configured for a control resource set is greater than a system bandwidth, and obtain an allocation resource allocated by a terminal, based on a resource allocation range, to a physical downlink shared channel PDSCH;
a sending module, configured to send the PDSCH based on the allocation resource of the PDSCH.

29. A resource allocation apparatus, comprising:
a processor;
a memory configured to store an instruction executable by the processor;
wherein the processor is configured to perform the method according to any one of claims 1 to 14 or any one of claims 15 to 26.

30. A storage medium, wherein the storage medium stores an instruction, and when the instruction in the storage medium is executed by a processor of a terminal, the terminal is enabled to execute the method according to any one of claims 1 to 14; or, when the instruction in the storage medium is executed by a processor of a network device, the network device is enabled to execute the method according to any one of claims 15 to 26.

31. A communication system, comprising a terminal and a network device, wherein,
the terminal is configured to execute the method according to any one of claims 1 to 14;
the network device is configured to execute the method according to any one of claims 15-26.
